# EUROPEAN PATENT APPLICATION

(11) **EP 2 418 857 A1**
(43) Date of publication of application: **15.02.2012**
(21) Application number: 10305885.5
(22) Date of filing: 12.08.2010
(51) Int. Cl.: H04N 13/00

(54) **Stereoscopic menu control**

(71) Applicant: Thomson Licensing, 92130 Issy-les-Moulineaux (FR)
(72) Inventor: Hoerentrup, Jobst, 30974, Wennigsen (DE)
(74) Representative: Schmidt-Uhlig, Thomas

(57) **Abstract**

The present invention relates to a method for providing a stereoscopic menu (1) to a 3D display, and more specifically to a method for controlling the appearance of the stereoscopic menu (1). The invention further relates to an apparatus (4) for playback of video data and a data structure making use of such method.

According to the invention, a method for controlling the appearance of a stereoscopic menu (1) comprising one or more graphical elements (11, 12, 13), each graphical element (11, 12, 13) being arranged at a certain depth (Zₙₒₘᵢₙₐₗ), has the steps of:
- receiving a user input (20) to reduce or increase a depth of the stereoscopic menu (1); and
- changing (31, 41) the depth (Zₙₒₘᵢₙₐₗ) of each graphical element (11, 12, 13) in accordance with the user input (20).

## Description

The present invention relates to a method for providing a stereoscopic menu to a 3D display, and more specifically to a method for controlling the appearance of the stereoscopic menu. The invention further relates to an apparatus for playback of video data and a data structure making use of such method.

Nowadays graphical on-screen menus are very common. For example, DVDs (Digital Versatile Discs) or BDs (Blu-Ray Discs) typically include on-screen menus. During playback of a movie the user is sometimes provided with the possibility to open pop-up menus. These menus often provide the possibility to select another audio track, another subtitle track, jump to another chapter, and so on. Also television sets generally include on-screen menus, e.g. to switch between different video sources or to change specific settings of the television sets.

Besides the above mentioned 2-dimensional video devices stereoscopic or 3D-devices are becoming more and more popular. For example, a range of 3D-capable television sets is already available on the market. Also, a Blu-ray 3D specification has recently been finalized by the Blu-ray Disc Association. The Blu-ray 3D format not only allows to store stereoscopic 3-dimensional video on the disc, but also to provide stereoscopic 3-dimensional interactive graphical overlays, e.g. for 3-dimensional menus. In such a menu, each graphical element can have individual "depth", i.e. an individual coordinate in z-space. The z-placement of the graphical elements is defined by the content author.

It is an object of the present invention to propose a solution for controlling the appearance of a stereoscopic menu.

According to the invention, a method for controlling the appearance of a stereoscopic menu comprising one or more graphical elements, each graphical element being arranged at a certain depth, has the steps of:
- receiving a user input to reduce or increase a depth of the stereoscopic menu; and
- changing the depth of each graphical element in accordance with the user input.

Similarly, an apparatus for playback of video data is adapted to use a method according to the invention for controlling the appearance of the stereoscopic menu. For this purpose the apparatus has a menu generator for generating a stereoscopic menu with one or more graphical elements, an input for receiving a user input to reduce or increase a depth of the stereoscopic menu, and a depth controller for changing the depth of each graphical element in accordance with the user input. The term "playback" here is to be understood as encompassing both retrieval of video data from a storage medium for subsequent display as well as the rendition of the video data on a stereoscopic display. In other words, both a 3D-capable display as well as a 3D-capable video source, e.g. a 3D Blu-ray Player, a 3D Set-top Box, or a computer with a 3D Graphics Card, constitute an apparatus for playback of video data. Also, the term "video data" encompasses both 3-dimensional and 2-dimensional motion-pictures and still-pictures.

The solution according to the present invention gives the user the possibility to adjust the overall depth of the 3D menu, i.e. to increase or to decrease the overall menu depth. Without user intervention the menu appears as defined by the content author, i.e. each graphical element has its individual position in z-space. When the user decreases the menu depth, the menu becomes flatter, up to the point where the menu becomes completely flat. In this case all the graphical elements share the same position in z-space, namely the reference depth as defined by the content author. When the user increases the menu depth, the distances between the z-positions of the different objects is increased, i.e. the depth effect becomes more pronounced. To provide the user with the possibility to control the menu depth has the advantage that the visual comfort is improved for those users that are uncomfortable with pronounced 3D effects. For example, it is known that "too much 3D" leads to headaches for some users.

Preferably, the menu depth is adapted by multiplying the depth values of the different objects of the menu with a depth control factor. For this purpose a multiplier is preferably provided. A depth control factor of "1" means that all elements appear as defined by the content author. When the depth control factor is set to "0" the menu becomes completely flat. Values between "0" and "1" cause a decrease of the menu depth, whereas values larger than "1" cause an increase of the menu depth. Negative values of the depth factor will move the graphical elements behind the reference depth and change the order of the graphical elements in depth direction. In addition to defining a depth control factor a depth offset value is advantageously defined. This value is added or subtracted from the depth values of the different objects of the menu using an adder. Like the depth control factor, the depth offset value may assume positive and negative values. The depth offset value does not change the distances between the z-positions of the different objects, but shifts the whole menu to a different depth.

Advantageously, for controlling the menu depth an on-screen control is provided to the user, e.g. two buttons for increasing and decreasing the menu depth. Of course, further buttons may be provided, e.g. for resetting the menu depth to the original value, or for controlling a depth offset applied to the menu. Alternatively, special buttons are provided on a remote control, or existing buttons, e.g. the colored buttons that are typically available, are redefined for this purpose.

Favorably, a comparator compares the user input with a specified range of input values. For example, both the depth control factor and depth offset value may be limited to positive values. Alternatively or in addition, the comparator compares a resulting depth of each graphical element with a specified depth range. In case the user input or the resulting depth is outside the specified range, the comparator limits the user input or the resulting depth accordingly. Advantageously, information about the range of allowed input values and/or information about the range of allowed depth values is included in the data structure or on the recording medium used for providing the video data and the menu data. In this way it is ensured that the appearance of the menu is kept within a range that has been approved by the content author or by the manufacturer of the apparatus for playback of video data.

Preferably, a controller checks whether controlling the appearance of the stereoscopic menu is prohibited. For this purpose the data structure or the recording medium used for providing the video data and the menu data advantageously includes the corresponding indicator, e.g. an enable/disable depth control flag. This gives the content author the possibility to prevent any manipulation of the menu, e.g. for artistic or esthetic reasons.

For a better understanding the invention shall now be explained in more detail in the following description with reference to the figures. It is understood that the invention is not limited to this exemplary embodiment and that specified features can also expediently be combined and/or modified without departing from the scope of the present invention as defined in the appended claims. In the figures:
- Fig. 1: depicts a 3D-menu comprising three graphical elements with a depth as specified by the author of the menu;
- Fig. 2: shows the 3D-menu of Fig. 1 with a reduced depth;
- Fig. 3: depicts the 3D-menu of Fig. 1 with a fully removed depth;
- Fig. 4: depicts the 3D-menu of Fig. 1 with an increased depth;
- Fig. 5: depicts the 3D-menu of Fig. 1 after adding a depth offset value;
- Fig. 6: illustrates the principle of a depth control factor and the depth offset value for controlling the depth of graphical elements; and
- Fig. 7: schematically depicts an apparatus for playback of video data, which is adapted to perform a method according to the invention.

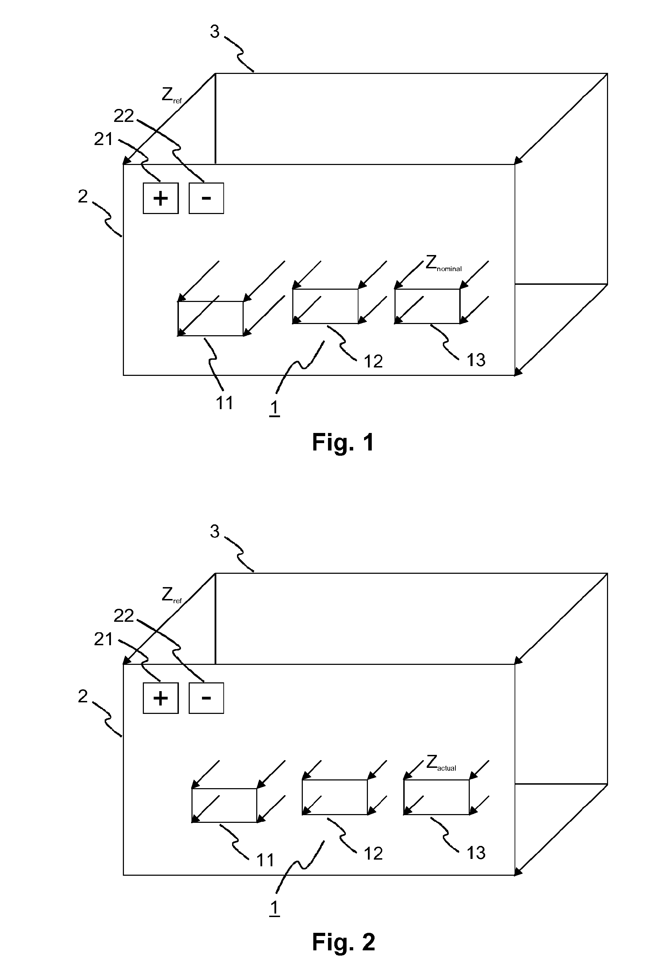

Fig. 1 depicts a 3D-menu 1 comprising three graphical elements 11, 12, 13 with a depth as specified by the author of the menu 1. The depth of the graphical elements 11, 12, 13 is defined relative to a reference plane 2, which is Typically defined by the content author located at a reference depth Z_{ref} from the screen plane 3. Two control buttons 21, 22 are provided, which allow the user to increase or decrease the depth of the graphical elements 11, 12, 13.

Fig. 2 shows the 3D-menu 1 of Fig. 1 with a reduced depth. As can be seen, the three graphical elements 11, 12, 13 are located closer to the reference plane 2. Apart from this, the difference between the z-positions of the different graphical elements 11, 12, 13 is reduced, i.e. the foremost graphical element 11 is now located closer - in z-direction - to the remaining graphical elements 12, 13.

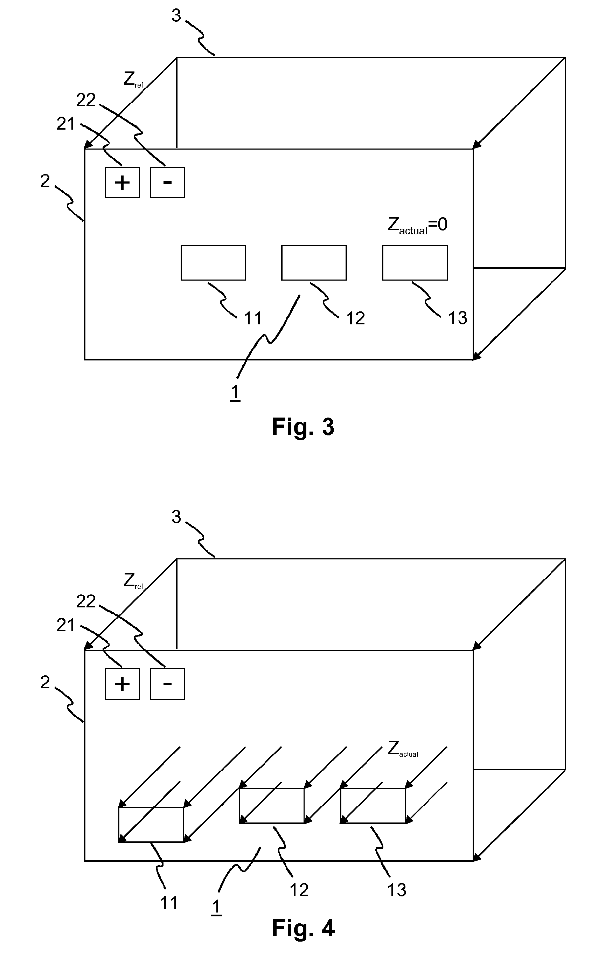

The case when the depth is fully removed from the menu 1 is illustrated in Fig. 3. As can be seen, all graphical elements 11, 12, 13 are now located in the reference plane 2. When a negative depth control factor or a sufficiently large negative depth offset value is entered, the graphical elements 11, 12, 13 are even located behind the reference plane 2.

Apparently, it is likewise possible to increase the depth of the menu 1. This situation is depicted in Fig. 4. All graphical elements 11, 12, 13 are arranged at an increased distance from the reference plane 2. Apart from this, the foremost graphical element 11 is located farther - in z-direction - from the remaining graphical elements 12, 13.

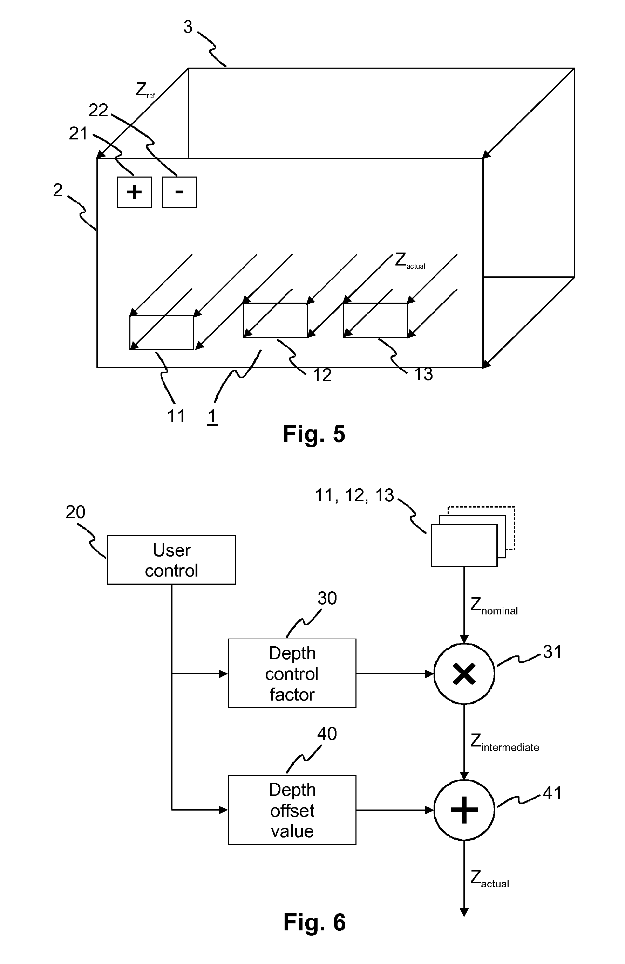

In Figs. 2 to 4 not only the position of the graphical elements 11, 12, 13 relative to the reference plane 2 is, changed, but also the relative distance in z-direction between the different graphical elements 11, 12, 13. In other words, the overall depth range of the menu 1 is compressed or stretched. A different situation is depicted in Fig. 5. In this case the depth range of the menu 1 is maintained, i.e. the relative distance in z-direction between the different graphical elements 11, 12, 13 remains unchanged. Instead, an identical depth offset is added to or subtracted from all graphical elements 11, 12, 13.

The principle of user control of the menu depth is illustrated in Fig. 6. In stereoscopic 3D menuing, virtual z-placement is achieved by drawing a graphical element 11, 12, 13 at a different horizontal position in the channel for the left eye than in the channel for the right eye. This difference is called disparity and is expressed in pixels. The described user control 20 influences a depth control factor 30 and/or a depth offset value 40, which in turn influence the disparity of all the individual graphical elements 11, 12, 13. Each graphical element 11, 12, 13 carries an individual z parameter Zₙₒₘᵢₙₐₗ. When determining the effective disparity of the graphical element 11, 12, 13, the individual z parameter Zₙₒₘᵢₙₐₗ is multiplied 31 with the depth control factor to obtain an intermediate z parameter Z_{intermediate}, i.e. the effective disparity linearly depends on the depth control factor. Consequently, modifying the depth control factor has a global, linear effect on the final disparities. In addition to multiplying 31 the individual z parameter Zₙₒₘᵢₙₐₗ with the depth control factor, the depth offset value is added 41 to the intermediate z parameter Z_{intermediate} to obtain an actual z parameter Z_{actual}. Of course, it is likewise possible to provide only one of the two possibilities for depth control, i.e. only the depth control factor or only the depth offset value.

The minimum absolute value of the depth control factor is "0", which makes the menu 1 flat. In this case all graphical elements 11, 12, 13 share the same disparity, and hence the same position in z-space. In principle, there is no upper limit for the depth control value, nor are there limits for the depth offset value. However, in practice it is advantageous if the content author defines such limits. These limits are preferably provided within the data stream, which comprises the image data. Of course, it is likewise feasible to implement the possibility to prohibit manipulation of the menu depth by the user. For this purpose the data stream favorably comprises an enable/disable depth control flag.

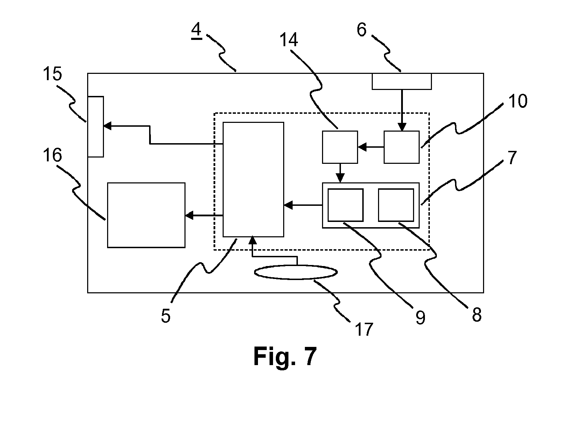

Fig. 7 schematically depicts an apparatus 4 for playback of video data, which is adapted to perform a method according to the invention. The apparatus has a menu generator 5 for generating a stereoscopic menu 1. The necessary menu data are retrieved, for example, from a recording medium 17, which comprises both video data and menu data. The apparatus further has an input 6 for receiving a user input 20 to reduce or increase a depth of the stereoscopic menu 1 and a depth controller 7 for changing 31, 41 the depth of each graphical element 11, 12, 13 of the stereoscopic menu 1 in accordance with the user input 20. For this purpose the depth controller 7 includes a multiplier 8 for multiplying 31 the depth of each graphical element 11, 12, 13 with a depth factor and/or an adder 9 for adding a depth offset value to the depth of each graphical element 11, 12, 13. A comparator 10 compares the user input 20 with a range of input values specified by the content author or by the manufacturer of the apparatus. Alternatively or in addition, the comparator 10 compares the resulting depth Z_{actual} of each graphical element 11, 12, 13 with a depth range specified by the content author or by the manufacturer of the apparatus, and if necessary limits the resulting depth Z_{actual} to the specified range. A controller 14 checks whether controlling the appearance of the stereoscopic menu 1 is prohibited. In the latter case the user input is disabled. The menu 1 generated by the menu generator 5 is either output to an external display via an output 15 or displayed on a display 16. Typically, the menu generator 5, the depth controller 7, the comparator 10, and the controller 14 will be integrated into a single processor, as illustrated by the dashed rectangle.

The above description is based on the so-called "2-planes mode" for creating stereoscopic menus. On a technical level, this mode requires the apparatus 4 for playback of video data to provide two independent drawing planes, one for the left eye and one for the right eye, to which graphical elements 11, 12, 13 with different individual disparities are drawn. In addition to different disparities also different images can be used on the two drawing planes for a graphical element 11, 12, 13. The two images of a graphical element 11, 12, 13 in the two drawing planes form a stereo pair, which gives the graphical element 11, 12, 13 a 3D-like appearance.

In addition to the 2-planes mode there also exists the possibility to create a flat graphical overlay, e.g. a flat menu, which is then superimposed on a stereoscopic 3D image or video. This mode is the so-called "1-plane" mode. In this mode the apparatus 4 only provides a single graphics plane to which graphical elements 11, 12, 13 are be drawn. The apparatus 4 positions this single graphics plane in z-space.

In case an apparatus 4 supports both the 2-planes mode and the 1-plane mode, the apparatus 4 advantageously detects if the user-controlled depth factor and offset are set to "0". If this is the case, the apparatus 4 switches the graphics system from the 2-planes mode to the 1-plane mode and renders a flat/2D version of the 3D menu 1 into the single graphics plane. When it is subsequently detected that the user-controlled depth factor and offset is changed back from "0" to some positive value, the apparatus 4 switches the graphics system back into 2-planes mode and starts rendering a stereoscopic 3D version of the menu 1 again, including usage of available stereo pairs.

## Claims

1. Method for controlling the appearance of a stereoscopic menu (1) comprising one or more graphical elements (11, 12, 13), each graphical element (11, 12, 13) being arranged at a certain depth (Zₙₒₘᵢₙₐₗ) , the method **having** the steps of:
- receiving a user input (20) to reduce or increase a depth of the stereoscopic menu (1); and
- changing (31, 41) the depth (Zₙₒₘᵢₙₐₗ) of each graphical element (11, 12, 13) in accordance with the user input (20).

2. Method according to claim 1, **wherein** the step of changing the depth (Zₙₒₘᵢₙₐₗ) of each graphical element (11, 12, 13) in accordance with the user input (20) includes multiplying (31) the depth (Zₙₒₘᵢₙₐₗ) of each graphical element (11, 12, 13) with a depth factor.

3. Method according to claim 1 or 2, **wherein** the step of changing the depth (Zₙₒₘᵢₙₐₗ) of each graphical element (11, 12, 13) in accordance with the user input (20) includes adding a depth offset value to the depth (Zₙₒₘᵢₙₐₗ) of each graphical element (11, 12, 13).

4. Method according to one of claims 1 to 3, **further** comprising the step of comparing the user input (20) with a specified range of input values and/or comparing a resulting depth (Z_{actual}) of each graphical element (11, 12, 13) with a specified depth range.

5. Method according to one of claims 1 to 4, **further** comprising the step of checking whether controlling the appearance of the stereoscopic menu (1) is prohibited.

6. Apparatus (4) for playback of video data, with a menu generator (5) for generating a stereoscopic menu (1) comprising one or more graphical elements (11, 12, 13), each graphical element (11, 12, 13) being arranged at a certain depth (Zₙₒₘᵢₙₐₗ), the apparatus (4) **having:**
- an input (6) for receiving a user input (20) to reduce or increase a depth of the stereoscopic menu (1); and
- a depth controller (7) for changing (31, 41) the depth (Zₙₒₘᵢₙₐₗ) of each graphical element (11, 12, 13) in accordance with the user input (20).

7. Apparatus (4) according to claim 6, **wherein** the depth controller (7) includes a multiplier (8) to change the depth (Zₙₒₘᵢₙₐₗ) of each graphical element (11, 12, 13) in accordance with the user input (20) by multiplying (31) the depth (Zₙₒₘᵢₙₐₗ) of each graphical element (11, 12, 13) with a depth factor.

8. Apparatus (4) according to claim 6 or 7, **wherein** the depth controller (7) includes an adder (9) to change the depth (Zₙₒₘᵢₙₐₗ) of each graphical element (11, 12, 13) in accordance with the user input (20) by adding a depth offset value to the depth (Zₙₒₘᵢₙₐₗ) of each graphical element (11, 12, 13).

9. Apparatus (4) according to one of claims 6 to 8, **further** comprising a comparator (10) for comparing the user input (20) with a specified range of input values and/or comparing a resulting depth (Z_{actual}) of each graphical element (11, 12, 13) with a specified depth range.

10. Apparatus (4) according to one of claims 6 to 9, **further** comprising a controller (14) for checking whether controlling the appearance of the stereoscopic menu (1) is prohibited.

11. Data structure comprising video data and menu data, the menu data comprising a stereoscopic menu (1) with one or more graphical elements (11, 12, 13), each graphical element (11, 12, 13) being provided with a depth value (Zₙₒₘᵢₙₐₗ), **characterized in that** the data structure comprises information about a range of allowed input values and/or information about a range of allowed depth values for controlling the appearance of the stereoscopic menu (1).

12. Data structure comprising video data and menu data, the menu data comprising a stereoscopic menu (1) with one or more graphical elements (11, 12, 13), each graphical element (11, 12, 13) being provided with a depth value (Zₙₒₘᵢₙₐₗ), **characterized in that** the data structure comprises information about whether controlling the appearance of the stereoscopic menu (1) is allowed or prohibited.

13. Recording medium (17) comprising video data and menu data, the menu data comprising a stereoscopic menu (1) with one or more graphical elements (11, 12, 13), each graphical element (11, 12, 13) being provided with a depth value (Zₙₒₘᵢₙₐₗ), **characterized in that** the recording medium (17) comprises at least one of information about a range of allowed input values for controlling the appearance of the stereoscopic menu (1), information about a range of allowed depth values for controlling the appearance of the stereoscopic menu (1), and information about whether controlling the appearance of the stereoscopic menu (1) is allowed or prohibited.
